Europäisches Patentamt

European Patent Office

Office européen des brevets

(19)

(11) Veröffentlichungsnummer: **0 082 451**
**B1**

# EUROPÄISCHE PATENTSCHRIFT

(45) Veröffentlichungstag der Patentschrift:
02.05.85

(51) Int. Cl.⁴: **F 16 L  47/02**

(21) Anmeldenummer: **82111514.4**

(22) Anmeldetag: **11.12.82**

(54) Verfahren und Gerät zum Verschweissen von Leitungselementen.

(30) Priorität: **23.12.81  CH 8239/81**

(43) Veröffentlichungstag der Anmeldung:
**29.06.83 Patentblatt 83/26**

(45) Bekanntmachung des Hinweises auf die Patenterteilung:
**02.05.85 Patentblatt 85/18**

(84) Benannte Vertragsstaaten:
**DE FR GB IT**

(56) Entgegenhaltungen:
**CH - A - 398 957**
**CH - A - 437 755**
**CH - A - 523 130**
**FR - A - 2 077 990**
**FR - A - 2 424 118**

(73) Patentinhaber: **GEORG FISCHER**
**AKTIENGESELLSCHAFT, Mühlentalstrasse 105,**
**CH-8201 Schaffhausen (CH)**

(72) Erfinder: **Thalmann, Alfred, Brunngasse 71,**
**CH-8448 Uhwiesen (CH)**
Erfinder: **Lehmann, Ernesto, Ungarbühlstrasse 26,**
**CH-8200 Schaffhausen (CH)**
Erfinder: **Roth, Emil, Walchstrasse 14,**
**CH-3073 Gümligen (CH)**
Erfinder: **Gerber, Walter, Breitfeldstrasse 40,**
**CH-3075 Rüfenacht (CH)**

ACTORUM AG

## Beschreibung

Die Erfindung betrifft ein Verfahren zum Verschweissen von Leitungselementen aus Kunststoff, wie es im Oberbegriff von Anspruch 1 gekennzeichnet ist, und ein zur Durchführung des Verfahrens erforderliches Gerät.

Es sind verschiedene Verfahren bekannt, Verbindungen von Kunststoffteilen durch Verschweissen herzustellen. Beispielsweise wird zur Verbindung von zwei Kunststoffrohren eine Schweissmuffe mit verlorener Heizwicklung über die Enden der zu verschweissenden Rohre gesteckt, wodurch eine dichte Verbindung der Rohre nach dem Aufschmelzen und Wiedererkalten der Verbindungsstelle entsteht.

Da Rohre und Muffen mit unterschiedlichen Durchmessern und dementsprechend unterschiedlicher Schweissenergie verarbeitet werden, muss das Stromversorgungsgerät auf diese verschiedenen Betriebsparameter einstellbar sein. Bisher wurde ein derartiges Gerät durch Eingabe der Nennweite der Schweissmuffe auf diese eingestellt und lieferte sodann unter konstanter Betriebsspannung während einer vorbestimmten Zeitspanne einen Heizstrom, wobei das Produkt aus Strom × Spannung × Zeit die erforderliche Wärmeenergie ergibt.

Bei diesen bekannten Geräten besteht jedoch die Gefahr, dass die Bedienungsperson sich irrt und eine falsche Nennweite eingibt, so dass entweder zuviel oder zuwenig Wärmeenergie geliefert wird, was beides zu schadhaften Verschweissungen führen kann.

Auch bei der durch die CH-A Nr. 523130 bekanntgewordenen Überwachungseinrichtung für Kunststoffschweissgeräte ist es erforderlich, dass jeweils ein Sollwert entsprechend der erforderlichen Heizenergie für die jeweilige Grösse der Verbindung bzw. der Wicklung an einem Sollwertgeber eingestellt werden muss. Überwacht wird lediglich, ob die abgegebene Schweissenergie entsprechend dem eingestellten Sollwert richtig dosiert war oder nicht. Eine Fehlbedienung ist somit ebenfalls nicht auszuschliessen.

Auch bei dem durch das CH-A Nr. 518790 bzw. FR-A Nr. 2077990 bekanntgewordene Verfahren wird lediglich die Schweisszeit bzw. die Schweissleistung abhängig von der Umgebungstemperatur so verändert, dass die Endtemperatur der Schweissstelle unabhängig von der Umgebungstemperatur praktisch immer dieselbe ist. Die Einstellung eines Sollwertes ist jedoch auch hier erforderlich, so dass die Qualität der Schweissung hier ebenfalls von der richtigen Einstellung abhängt.

Die Erfindung hat zur Aufgabe, ein Verfahren und ein dafür erforderliches Gerät bereitzustellen, bei dem eine Fehlanpassung der Wärmeenergie an die zu verschweissenden Leitungselemente bzw. Formteile mit Sicherheit verhindert wird, und welche ferner die allgemeine Handhabung des Gerätes vereinfachen.

Erfindungsgemäss wird dies durch ein Verfahren, wie es im Anspruch 1, und durch ein Gerät, wie es in Anspruch 6 gekennzeichnet ist, erreicht.

Weitere vorteilhafte Verfahrens- und Gerätemerkmale sind in den übrigen Ansprüchen gekennzeichnet.

Durch die Messung des ohmschen Widerstandes und die Zuordnung einer Schweisszeit entsprechend einer fest eingegebenen vorprogrammierten Leitlinie in Abhängigkeit von dem gemessenen ohmschen Widerstand ist eine Einstellung einer Schweisszeit entsprechend der Nennweite oder anderer Daten nicht mehr erforderlich, so dass Fehlschweissungen weitgehend eliminiert werden.

Durch die Messung der Impedanz kann festgestellt werden, ob es sich um eine geschlossene Heizspule handelt, wie sie bei Muffen verwendet werden, oder ob es sich um eine um das Rohr legbare Heizmatte handelt, welche bei Schellen verwendet werden.

Für beide Arten sind bei gleichen Rohrdurchmessern unterschiedliche Schweisszeiten erforderlich, was durch die Wahl der entsprechenden Leitkurve mittels der Impedanzmessung automatisch berücksichtigt wird.

Weitere Vorteile sind gegeben durch die automatische Kompensation von Spannungsschwankungen und der Umgebungstemperatur bei der Einstellung der Schweisszeit.

Das Gerät zeichnet sich durch die einfache Bedienbarkeit aus, welches neben einem Startschalter und eines Totausschalters keine weiteren Einstell- bzw. Bedienungseinrichtungen aufweist.

Die eingebaute Steuerlogik ermöglicht im Zusammenhang mit den Messeinrichtungen für den ohmschen Widerstand und der Impedanz einen automatischen Ablauf des Schweissvorganges und gewährleistet fehlerfreie Schweissungen.

Die Erfindung wird nachfolgend anhand von Zeichnungen beschrieben.

Es zeigen:

Fig. 1 ein Diagramm der funktionellen Abhängigkeit der Schweisszeit und des Heizstromes,

Fig. 2 ein Diagramm der Wärmeenergie in Abhängigkeit von der Verbindungsfläche von Formteilen,

Fig. 3 ein Diagramm zum zeitlichen Verlauf des Heizstromes,

Fig. 4 ein Diagramm für die Schweisszeit in Abhängigkeit vom ohmschen Widerstand der Wicklungen, genannt Leitlinien, und

Fig. 5 ein Blockschaltbild des Gerätes in vereinfachter Darstellung.

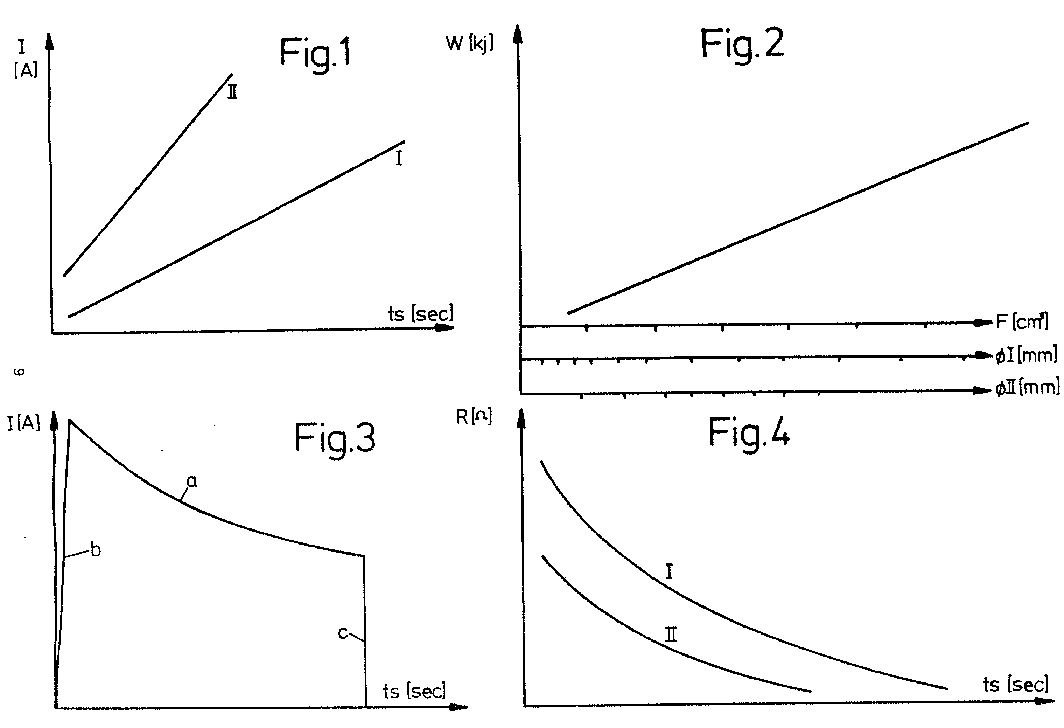

In der Fig. 1 ist die Abhängigkeit der Schweisszeit, also der Zeit, während der der Heizstrom I fliesst, in Abhängigkeit von der Stromstärke des Heizstroms dargestellt, wobei diese Abhängigkeit frei gewählt werden kann.

Die freie Wählbarkeit dieser Abhängigkeit bezieht sich darauf, dass für eine Reihe von Abmessungen bzw. Normgrössen von Formteilen bzw. Schweiss- oder Heizmuffen der elektrische Widerstand der Heizwicklung so gewählt wird, dass der sich aufgrund einer für alle Grössen gleichen und konstanten Spannung einstellende Heizstrom multipliziert mit dieser Spannung eine Heizleistung ergibt, welche, wenn die für eine bestimmte Formstück- bzw. Muffengrösse notwendige Wärmeenergie durch diese Heizleistung dividiert wird, die Heizdauer bestimmt. Es bestehen hier also drei Parameter, deren Produkt festgelegt ist. Demzufolge können hiervon zwei Parameter gewählt werden, der dritte ist damit bestimmt. Bei konstant gehaltener Spannung ist einer der drei Parameter Strom, Spannung und Heizdauer fixiert, so dass nur mehr einer von den beiden anderen frei gewählt werden kann. Prinzipiell wäre es möglich, auch einen zweiten Parameter konstant zu lassen, beispielsweise mit immer konstantem Strom oder mit gleichbleibender Heizdauer zu fahren, doch wird durch die Variation aller Parameter der Arbeitsbereich vergrössert, ohne in unpraktische Grössenordnungen der abhängigen Veränderlichen zu kommen, und zweitens gewinnt man dadurch einen weiteren Vorteil, nämlich eine automatische Kompensation der Anfangstemperatur der Schweissstelle bei Widerstandsdraht der Wicklung z. B. aus Kupfer bzw. Kupferlegierungen.

In der Fig. 1 sind zwei Kurven dargestellt, durch welche die freie Wählbarkeit der Steilheit in Abhängigkeit von äusseren Parametern dokumentiert wird.

Die Kurve I mit der geringeren Steilheit gilt für Schweissmuffen, welche sich in einem eingefrorenen gedehnten Zustand befinden. Derartige Muffen sind bekannt und werden in der EP-A Nr. 0036963 beschrieben. In diesem Fall ist es günstig, mit geringem Strom während längerer Zeit zu fahren, damit die Muffe, welche im gedehnten Zustand auf die Rohrverbindungsstelle gesteckt wird, sich langsam erwärmt und schrumpfen kann, bevor der eigentliche Schweissvorgang stattfindet. Diese Schrumpfung bewirkt, dass ein möglichst guter Kraft- und Formschluss zwischen Rohrenden und Muffe hergestellt wird und dadurch der für eine gute Verschweissung nötige Schweissdruck gewährleistet ist.

Die Kurve II gilt für Anbohrschellen, welche über ein bereits fertig verlegtes und unter Umständen auch unter Druck stehendes Rohr gelegt werden, wobei die Schelle selbst keinen Kraftschluss erzeugt, sondern mittels einer Spanneinrichtung an das Rohr gepresst wird. Schellen dieser Art sind in der CH-A Nr. 570577 beschrieben. Hierbei ist kein langsames Anwärmen notwendig, sondern im Gegenteil bei bereits unter Druck stehenden Rohren ist eine möglichst kurze Schweisszeit und damit ein hoher Strom erwünscht, damit der Temperaturgradient im Rohr von aussen nach innen bei vorgegebener Aussentemperatur im Schweissbereich — nämlich der Schweisstemperatur — möglichst niedrig ist und damit die Stabilität des Rohres während des Schweissens gewahrt bleibt.

Die beiden Kurven I und II verbinden die Punkte für die Wertepaare bezüglich Strom und Zeit von einer Reihe von Muffen- bzw. Schellengrössen.

Die Fig. 2 zeigt ein Diagramm für die Abhängigkeit der Wärmeenergie, welche für die Verschweissung von Muffen und Schellen notwendig ist, von der Fläche der zu verschweissenden Teile. Muffen und Schellen haben pro Nennweite unterschiedlich grosse Schweisslängen, was unterschiedlich grosse zu verschweissende Flächen F ergibt, so dass zwar die Wärmeenergie pro zu verschweissende Flächeneinheit für beide gleich ist, für die ganze Muffe oder Schelle gleicher Nennweite jedoch unterschiedlich ist. In der Fig. 2 existieren daher für die gleiche Kurve zwei Abszissen, I für Muffen und II für Schellen, was auch bei gleicher Abszisse durch zwei Kurven ausgedrückt werden kann, die allerdings nicht parallel sind. Der Grund hierfür liegt darin, dass die Schweissflächen der Schellen und Muffen mit der Nennweite unterschiedlich ansteigen, da die Breiten von Schellen und Muffen mit den Nennweiten unterschiedlich variieren. Die Schweissfläche der Schellen wächst also linear mit der Nennweite, wenn die Breite konstant ist. Bei der Muffe aber ändert sich mit der Nennweite auch die Breite, so dass eine höhere exponentielle Abhängigkeit der Schweissfläche und damit der gesamten Schweissenergie bei Muffen besteht als bei den Schellen.

Einen unwesentlichen Unterschied der Energiedichten von Muffen und Schellen ergibt die unterschiedliche Schweissgeschwindigkeit, da bei dem länger dauernden Prozess die Wärmeverluste etwas grösser sind.

Die Fig. 3 zeigt ein Diagramm der Abhängigkeit des Schweissstroms von der Zeit. Beim Einschalten des Stroms zum Zeitpunkt t=o steigt die Stromstärke sofort auf ihren Maximalwert (Kurve b) und sinkt dann durch die Eigenerwärmung des Leiters und entsprechend dem materialabhängigen positiven Temperaturkoeffizienten wieder ab (Kurve a).

Es wurden in einer Reihe von experimentellen Versuchen Anfangs- und Endwiderstandswerte der Heizwicklungen für die Kurve a ermittelt, wobei sich Werte für Kupferwicklungen von

$$R_A \approx 1{,}7 \times R_E$$

als typisch ergaben.

Aufgrund der vorstehenden Erläuterungen zu den Fig. 1 und 2 können die in den Abmessungen als auch in der Ausbildung — z. B. als Muffe oder Schelle — unterschiedlichen Formteile durch elektrische Messungen identifiziert werden, und die für dieses Formteil erforderliche Schweisszeit wird dann automatisch in dem Dosiergerät eingestellt.

Für die Unterscheidung ob Muffe oder Schelle wird zuerst eine Messung der Impedanz — auch Scheinwiderstand genannt — der vorher an das Gerät angeschlossenen Wicklung mit einer Wechselspannung durchgeführt, wobei sich die Impedanz aus dem ohmschen Widerstand und der Induktivität der Wicklung bzw. Spule zusammensetzt.

Muffen enthalten eine Heizwicklung mit geschlossenen Schleifen, da eine Muffe aus einem fertigen Zylinder — Luftspule genannt — besteht. Eine Schelle entspricht etwa einem Armband, das zum Anlegen offen sein muss und erst im angelegten Zustand ganz oder teilweise geschlossen wird.

In diesem Fall muss selbstverständlich auch der Heizdraht in einer Weise angeordnet sein, dass er wie eine Matte um ein Rohr gelegt und dann verbunden oder einfach in dieser Lage von der Schelle eingeklemmt wird.

Eine sinnvolle Anordnung des Heizdrahtes für diesen Zweck ist einfach ein Rechteck mit schlangenlinienförmiger Führung des Drahtes, wobei eine Seite des Rechtecks dem Rohrumfang oder einem Teil von diesem entspricht.

Da bei vergleichbaren Drahtdurchmessern und Drahtlängen die Induktivität einer Luftspule weitaus grösser ist als die einer schlangenlinienförmigen Anordnung des Drahtes zu einer Matte, kann aufgrund einer Messung der Impedanz der Luftspule bzw. der Matte auf einfache Weise festgestellt werden, ob es sich um eine Muffe oder um eine Schelle handelt.

Im Gerät ist nun für die Muffen und die Schellen je eine unterschiedliche vorprogrammierte, in Fig. 4 dargestellte Leitlinie I oder II fest eingegeben, welche jeweils in Abhängigkeit vom ohmschen Widerstand der Wicklung die Schweisszeit angibt.

Aufgrund der unterschiedlichen Impedanz zwischen Luftspule und Matte bei der Muffe oder der Schelle, welche durch eine Messung festgestellt wird, wird zuerst die entsprechende Leitlinie I oder II ausgewählt.

Danach wird der ohmsche Widerstand mit einem konstanten Gleichstrom gemessen und auf der ausgewählten Leitlinie I oder II die entsprechende Schweisszeit festgelegt.

Die Schweisszeit wird durch einzelne Zählschritte gebildet, deren Anzahl durch die ohmsche Widerstandsmessung vorgewählt bzw. bestimmt wird. Die Frequenz der Zählschritte ist abhängig von der Primärspannung, wodurch Spannungsschwankungen unabhängig von der bezogenen Leistung während der Schweisszeit so kompensiert werden, dass die Zufuhr der jeweils erforderlichen Schweissenergie in zulässigen Grenzen eingehalten wird.

Die Kompensation der Umgebungstemperatur bei der Schweisszeit ergibt sich durch die Wahl des Leitermaterials der Wicklung. Bei Kupfer bzw. Kupferlegierungen und z. B. auch bei Aluminium und Aluminiumlegierungen ist die Abhängigkeit des spezifischen Widerstandes von der Temperatur derart, dass bei der Widerstandsmessung vor Beginn der Schweissung und der nachfolgenden Bestimmung der Schweisszeit aufgrund der Leitlinie der Einfluss der Umgebungstemperatur bei der Energiezufuhr automatisch kompensiert wird.

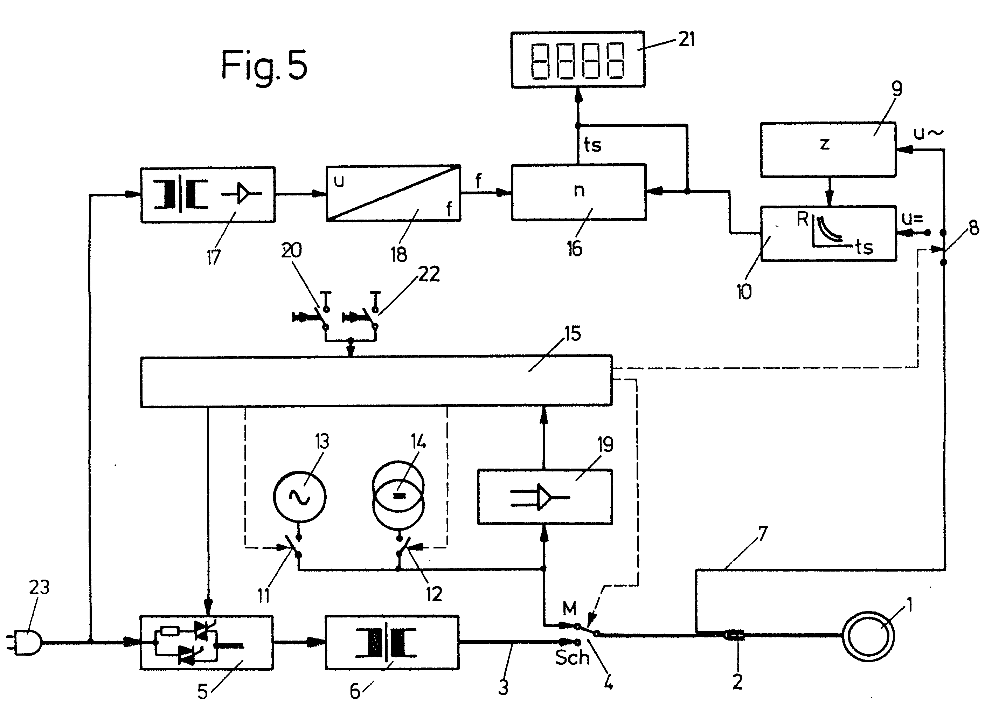

Fig. 5 zeigt das vereinfachte Blockschaltbild für das Gerät zum Dosieren der elektrischen Energie.

Eine Wicklung 1 eines Formstückes, z. B. einer Muffe oder einer Schelle, ist über Steckkontakte 2 mit einem im Leistungsstromkreis 3 angeordneten Umschalter 4 verbunden. In dem Leistungsstromkreis 3 ist nach der Anschlusseinrichtung 23 an das Stromnetz oder an eine andere Energiequelle wie z. B. einen Generator eine elektronische Schalteinrichtung 5 mit Softstart und ein Schweisstrafo 6 angeordnet. Von dem Steckkontakt 2 führt eine Messleitung 7 zu einem Umschalter 8, welcher einerseits die Verbindung zur Impedanzmesseinrichtung 9 zur Erkennung des Formstückes oder andererseits zu einer Messeinrichtung 10 für die ohmsche Widerstandsmessung herstellt, in welcher die in Fig. 4 gezeigten Leitlinien I/II ($t_s$ = f [R]) gespeichet sind.

Die Messleitung 7 wird über den Umschalter 4 und über einen Schalter 11 mit einem Sinusoszillator 13 zur Erzeugung eines Wechselspannungsmesssignals oder über einen Schalter 12 mit einer Konstantstromquelle 14 zur Erzeugung eines Gleichspannungsmesssignals verbunden.

Die Schalter 4, 8, 11 und 12 sind von einer Steuerlogik 15 schaltbar.

Die Messeinrichtung 10 ist mit einem Impulsgenerator und Vorwahlzähler 16 für die Schweisszeit wirkverbunden, dessen Zählfrequenz abhängig von der Primärspannung über ein Primärspannungsmessgerät 17 und einen Spannungsfrequenzwandler 18 beeinflussbar ist.

Eine Digitalanzeige 21 zur optischen Anzeige der Art des Formstückes, des gemessenen ohmschen Widerstandes und der laufenden Schweisszeit sind mit dem Vorwahlzähler 16 bzw. mit den Messeinrichtungen 9 bzw. 10 wirkverbunden.

Zur Feststellung, ob die Verbindung der Wicklung 1 mit dem Steckkontakt 12 hergestellt oder wieder unterbrochen ist, dient die mit 19 bezeichnete Steuereinrichtung, welche mit der Steuerlogik 15 wirkverbunden ist.

Weiterhin ist ein Startschalter 20 und ein Stoppschalter 22 mit der Steuerlogik 15 und diese mit der im Leistungsstromkreis 3 angeordneten elektronischen Schalteinrichtung 5 wirkverbunden.

Der Funktionsablauf bei einem Schweissvorgang mit dem beschriebenen Gerät ist wie folgt.

Nach dem Verbinden der Wicklung 1 eines Formstückes wie z. B. Muffe oder Schelle mit dem Gerät über die Steckkontakte 2 wird nach einem manuellen Startsignal die Messphase durch die Steuereinrichtung 19 und die Steuerlogik 15 eingeleitet, wobei der Umschalter 4 auf M-Kontakt steht. Zuerst erfolgt die Messung der Impedanz durch die Messeinrichtung 9 mittels dem durch den Sinusoszillator 13 erzeugten Wechselspannungsmesssignal. Entsprechend dieser Messung wird eine der eingegebenen Leitlinien I oder II (t = f [R]) gewählt. Durch einen folgenden Steuerbefehl der Steuerlogik 15 erfolgt die Messung des ohmschen Widerstandes der Wicklung 1 durch die Messeinrichtung 10 mittels eines durch die Konstantstromquelle 14 erzeugten Gleichspannungsmesssignals. Anschliessend wird der Vorwahlzähler 16 mit der dem ohmschen Widerstand entsprechenden Schweisszeit ($t_s$) gemäss der ausgewählten Leitlinie geladen. Danach erfolgt das Einschalten der elektronischen Schalteinrichtung 5 bei Stellung des Umschalters 4 auf Kontakt Sch und der Schweissvorgang durch Abzählen der gespeicherten Zählschritte bis zum Zählerstand Null. Die Frequenz der erzeugten Zählschritte wird wie bereits beschrieben direkt proportional zu den Primärspannungsschwankungen während dem Schweissvorgang mittels der Geräte 17 und 18 variiert. Nach dem Abziehen der Steckkontakte 2 von der Wicklung 1 des Formstückes erfolgt eine Reseterzeugung (Nullstellung) aller Mess- und Anzeigeeinrichtungen.

Mittels des Stoppschalters 22 kann im Notfall ein Abbruch des Schweissvorganges ohne Reseterzeugung bewirkt werden. Die elektronische Schalteinrichtung 5 gewährleistet zum Schutz der vorgeschalteten Sicherungen eine Einschaltstrombegrenzung und bewirkt einen sogenannten Softstart.

## Patentansprüche

1. Verfahren zum Verschweissen von Leitungselementen aus Kunststoff mit Hilfe von in Formteilen angeordneten Wicklungen (1) aus einem elektrisch leitfähigen Draht unter Verwendung eines elektrischen Energiedosiergerätes (2 bis 21), mittels welchem in der angeschlossenen Wicklung (1) eine dosierte Menge Wärmeenergie durch Stromzufuhr erzeugt wird, gekennzeichnet durch die Verfahrensschritte:
- manuelle Auslösung eines Startsignales (2),
- Messung (10) des ohmschen Widerstandes der angeschlossenen Wicklung (1) mittels einer Gleichspannung (14),
- Zuordnung einer Schweisszeit ($t_s$) durch Bestimmung einer Anzahl Zählschritte (16) entsprechend mindestens einer fest eingegebenen, vorprogrammierten Leitlinie in Abhängigkeit des gemessenen ohmschen Widerstandes, und
- Ablauf der Schweisszeit ab Beginn der Stromzufuhr durch Abzählen der gespeicherten Anzahl Zählschritte bis zum Zählerstand Null, bei welchem die Stromzufuhr unterbrochen wird.

2. Verfahren nach Anspruch 1, dadurch gekennzeichnet, dass vor der ohmschen Widerstandsmessung eine Messung (9) der Impedanz der angeschlossenen Wicklung mittels einer Wechselspannung (13) erfolgt und entsprechend diesem Messwert eine der fest eingegebenen Leitlinien für die Ermittlung der Schweisszeit zugeordnet wird.

3. Verfahren nach einem der Ansprüche 1 oder 2, dadurch gekennzeichnet, dass zur Kompensation von Spannungsschwankungen der Energiequelle die Frequenz der Zählschritte durch ein von dieser Primärspannung abhängiges Steuersignal beeinflussbar ist.

4. Verfahren nach einem der Ansprüche 1 bis 3, dadurch gekennzeichnet, dass für jede unterschiedliche Ausbildung bzw. Form der Wicklung und/oder des Formteiles eine entsprechend programmierte Leitlinie fest eingegeben ist.

5. Verfahren nach einem der Ansprüche 1 bis 4, dadurch gekennzeichnet, dass bei entsprechender Wahl des Leitermaterials für die Wicklung der Einfluss der Wicklungstemperatur vor Beginn der Energiezufuhr bei der ohmschen Widerstandsmessung automatisch berücksichtigt wird, die Schweisszeit somit in Abhängigkeit der Umgebungstemperatur zugeordnet wird, wodurch der Einfluss dieser Umgebungstemperatur bei der Energiezufuhr automatisch kompensiert wird.

6. Gerät zur Dosierung der elektrischen Energie beim Verschweissen von Leitungselementen aus Kunststoff gemäss dem Verfahren nach einem der Ansprüche 1 bis 5, mit einer Einstelleinrichtung für die erforderliche Schweissenergie für die Formteile, dadurch gekennzeichnet, dass eine Messeinrichtung (10) für die ohmsche Widerstandsmessung der Wicklung (1) angeordnet ist, mittels welcher die Schweisszeit ($t_s$) in Abhängigkeit einer vorprogrammierten Leitlinie bestimmbar ist und in Verbindung mit einem Vorwahlzähler (16) in Zählschritten speicherbar ist.

7. Gerät nach Anspruch 6, dadurch gekennzeichnet, dass eine zweite Messeinrichtung (9) zur Bestimmung der Impedanz der Wicklung (1) angeordnet ist und dass mit dieser Messung eine von mindestens zwei vorprogrammierten Leitlinien auswählbar ist.

8. Gerät nach einem der Ansprüche 6 oder 7, dadurch gekennzeichnet, dass dem Vorwahlzähler (16) ein Impulsgenerator (16) zugeordnet ist, welcher mit einem Spannungsfrequenzwandler (18) und einem Gerät zur Primärspannungsmessung (17) zwecks Veränderung der Frequenz der Zählimpulse abhängig von der Primärspannung wirkverbunden ist.

9. Gerät nach einem der Ansprüche 6 bis 8, dadurch gekennzeichnet, dass eine Steuerlogik (15) für die Steuersignale und den zeitlichen Ablauf der Messvorgänge vorhanden ist.

10. Gerät nach einem der Ansprüche 6 bis 9, dadurch gekennzeichnet, dass im Leistungsstromkreis (3) eine elektronische Schalteinrichtung (5) angeordnet ist, welche eine Einschaltstrombegrenzung zum Schutz gegen Fehlauslösungen der vorgeschalteten Sicherungsgeräte aufweist.

## Claims

1. Process for welding plastics pipe elements with the aid of windings (1), comprising an electrically conductive wire, arranged in mould parts, by using an electrical energy metering device (2 to 21), by means of which a metered amount of heat energy is produced in the attached winding (1) by current supply, characterised by the process steps:
- manual release of a start signal (2),
- measurement (10) of the ohmic resistance of the attached winding (1) by means of a direct voltage (14),
- assignment of a welding time ($t_s$) by determining from a number of counting steps (16) in accordance with at least one permanently fed-in preprogrammed directrix dependent on the measured ohmic resistance,
- operating course of the welding time from the beginning of the current supply by counting off the stored number of counting steps up to the meter state zero, at which the current supply is interrupted.

2. Process according to Claim 1, characterised in that, before the ohmic resistance measurement, a measurement (9) of the impedance of the attached winding takes place by means an alternating voltage (13) and, according to this measurement value, one of the permanently fed-in directrices is assigned for the determination of the welding time.

3. Process according to one of Claims 1 or 2, characterised in that, for the compensation of voltage variations in the energy source, the frequency of the counting steps can be influenced by a control signal dependent on this primary voltage.

4. Process according to one of Claims 1 to 3, characterised in that, for each diffrent construction or form of the winding and/or the mould part, a correspondingly programmed directrix is permanently fed in.

5. Process according to one of Claims 1 to 4, characterised in that, with appropriate selection of the pipe material for the winding, the influence of the winding temperature before the beginning of the energy supply during the ohmic resistance measurement is automatically taken into account, the welding time is thus assigned in dependence on the ambient temperature, whereby the influence of this ambient temperature is automatically compensated during energy supply.

6. Device for metering the electrical energy when welding plastics pipe elements according to the process of one of Claims 1 to 5, with an adjustment device for the necessary welding energy for the mould parts, characterised in that a measuring device (10) is disposed for the ohmic resistance measurement of the winding (1), by means of which the welding time ($t_s$) can be determined in dependence on a preprogrammed directrix and can be stored in counting steps in conjunction with a preselection meter (16).

7. Device according to Claim 6, characterised in that a second measuring device (9) is arranged for determining the impedance of the winding (1) and in that, with this measurement, one of at least two preprogrammed directrices can be selected.

8. Device according to one of Claims 6 or 7, characterised in that a pulse generator (16) is associated with the preselection meter (16) which is operatively connected to a voltage-frequency transducer (18) and a device for the primary-voltage measurement (17) for the purpose of changing the frequency of the counting pulses in dependence on the primary voltage.

9. Device according to one of Claims 6 to 8, characterised in that a control logic (15) is present for the control signals and the time sequence of the measuring processes.

10. Device according to one of Claims 6 to 9, characterised in that an electronic switching device (5) is arranged in the power circuit (3), which device has a switch-on current limit for protection against faulty releases of the series-connected safety devices.


**Revendications**

1. Procédé pour souder des éléments de tuyauterie en matière plastique à l'aide d'enroulements (1) disposés dans des pièces de forme et constitués par un fil électriquement conducteur, moyennant l'utilisation d'un appareil de dosage d'énergie (2 à 21) à l'aide duquel une quantité dosée d'énergie thermique est produite, par apport de courant dans l'enroulement (1) raccordé, caractérisé par les phases opératoires:
— déclenchement manuel d'un signal de démarrage (2),
— mesure (10) de la résistance ohmique de l'enroulement (1) raccordé, au moyen d'une tension continue (14),
— détermination d'une durée de soudage ($t_s$) par détermination d'un nombre de pas de comptage (16) conformément à au moins une courbe pilote mémorisée à demeure et programmée d'avance en fonction de la résistance ohmique mesurée,
— déroulement de la durée de soudage à partir du début de l'envoi de courant par décompte du nombre mémorisé de pas de comptage jusqu'à l'état de comptage nul, pour lequel l'apport de courant est interrompu.

2. Procédé selon la revendication 1, caractérisé en ce que, avant la mesure de la résistance ohmique, on effectue une mesure (9) de l'impédance de l'enroulement raccordé à l'aide d'une tension alternative (13) et que l'on détermine, conformément à cette valeur de mesure, l'une des courbes pilotes, mémorisées à demeure, pour la détermination de la durée de soudage.

3. Procédé selon l'une des revendications 1 ou 2, caractérisé en ce que, pour la compensation de variations de la source et de l'énergie, la fréquence des pas de comptage peut être influencée par un signal de commande dépendant de cette tension primaire.

4. Procédé selon l'une des revendications 1 à 3, caractérisé en ce qu'une directive programmée de façon correspondante est mémorisée à demeure pour chaque réalisation ou forme différente de l'enroulement et/ou de la pièce de forme.

5. Procédé selon l'une des revendications 1 à 4, caractérisé en ce que, pour un choix correspondant du matériau conducteur pour l'enroulement, l'influence de la température de l'enroulement avant le début de l'apport d'énergie est prise en compte de façon automatique lors de la mesure de la résistance ohmique, et que par conséquent la durée de soudage est déterminée en fonction de la température ambiante, ce qui permet d'avoir une compensation automatique de l'influence de cette température ambiante lors de l'apport de l'énergie.

6. Appareil pour réaliser le dosage de l'énergie électrique lors du soudage d'éléments de tuyauterie en matière plastique conformément au procédé selon l'une des revendications 1 à 5, comportant un dispositif de réglage de l'énergie de soudage nécessaire pour les pièces de forme, caractérisé en ce qu'il est prévu un dispositif de mesure (10), servant à réaliser la mesure de la résistance ohmique de l'enroulement (1), à l'aide duquel la durée de soudage ($t_s$) peut être déterminée en fonction d'une courbe pilote programmée d'avance, et peut être mémorisée selon des pas de comptage, en liaison avec un compteur de présélection (16).

7. Appareil selon la revendication 6, caractérisé en ce qu'il est prévu un second dispositif de mesure (9) servant à déterminer l'impédance de l'enroulement (1), et que l'on peut sélectionner, à l'aide de cette mesure, l'une d'au moins deux courbes pilotes programmées d'avance.

8. Appareil selon l'une des revendications 6 ou 7, caractérisé en ce qu'au compteur de présélection (16) est associé un générateur d'impulsions qui est relié à un convertisseur tension-fréquence (18) et un appareil (17) servant à effectuer la mesure de la tension primaire, en vue de modifier la fréquence des impulsions de comptage en fonction de la tension primaire.

9. Appareil selon l'une des revendications 6 à 8, caractérisé en ce qu'il est prévu un circuit logique de commande (15) pour les signaux de commande et pour le déroulement dans le temps des opérations de mesure.

10. Appareil selon l'une des revendications 6 ou 9, caractérisé en ce que dans le circuit de puissance (3) se trouve disposé un dispositif électronique de commutation (5) qui comporte un dispositif de limitation du courant de branchement servant à fournir une protection vis-à-vis de déclenchements erronés des appareils de sécurité branchés en amont.

0 082 451

Fig. 5

0 082 451